# EUROPÄISCHE PATENTSCHRIFT

(11) **EP 1 427 511 B1**
(45) Veröffentlichungstag und Bekanntmachung des Hinweises auf die Patenterteilung: **18.10.2006**
(21) Anmeldenummer: 02750819.1
(22) Anmeldetag: 03.07.2002
(51) Int. Cl.: B01D 53/22, B01D 69/08

(54) **METALLISCHE LÖSUNGS-DIFFUSIONS-MEMBRAN SOWIE VERFAHREN ZUR HERSTELLUNG**
METAL SOLUTION-DIFFUSION MEMBRANE AND METHOD FOR PRODUCING THE SAME
MEMBRANE METALLIQUE DE SOLUBILISATION-DIFFUSION ET SON PROCEDE DE PRODUCTION

(30) Priorität: 25.07.2001 DE 10135390
(43) Veröffentlichungstag der Anmeldung: 16.06.2004
(73) Patentinhaber: Fraunhofer-Gesellschaft zur Förderung der angewandten Forschung e.V., 80636 München (DE)
(72) Erfinder: PAN, Xiulian, 70569 Stuttgart (DE); STROH, Norbert, 71106 Magstadt (DE); BRUNNER, Herwig, 70569 Stuttgart (DE)
(86) Internationale Anmeldenummer: PCT/DE2002/002415
(87) Internationale Veröffentlichungsnummer: WO 2003/011433

(56) Entgegenhaltungen:
- US-A- 4 364 759
- US-A- 5 215 729
- US-A1- 2001 000 380

## Beschreibung

### Technisches Anwendungsgebiet

Die vorliegende Erfindung betrifft eine metallische Lösungs-Diffusions-Membran aus einem makroporösen Grundkörper, auf dem eine dünne metallische Membranschicht ausgebildet ist, sowie ein Verfahren zur Herstellung.

Metallische Lösungs-Diffusions-Membranen spielen eine große Rolle bei der Reinigung oder Filterung von Gasen bei industriellen Prozessen. So hat eine zunehmende Nachfrage nach Wasserstoff als Energieträger oder als Reaktionsprodukt in der chemischen Industrie das Forschungsinteresse auf die Herstellung, Reinigung und den Einsatz von Wasserstoff gelenkt. Die Reinigung bzw. Filterung von Wasserstoff spielt hierbei eine wesentliche Rolle. Gerade metallische Lösungs-Diffusions-Membranen, wie beispielsweise Palladium-Membranen, eignen sich sehr gut zur Trennung und Reinigung von Wasserstoff für Anwendungen in der Elektronikindustrie, der Metallindustrie oder der chemischen Industrie. Die mit Palladium-Membranen verbundenen Nachteile bestehen vor allem in der geringen Permeabilität und Langzeitstabilität sowie in einem geringen Trennflächen-Volumen-Verhältnis.

### Stand der Technik

Bisher werden Palladium-Membranen für die Reinigung von Wasserstoff in der Regel auf großflächige poröse Trägerkörper aufgebracht. So ist es beispielsweise bekannt, Palladium-Membranen in Form von Folien herzustellen, die dann auf eine Trägerstruktur aufgebracht werden. Derartige Folien lassen sich jedoch nur mit einer minimalen Dicke von in der Regel ca. 7 µm herstellen, so dass deren Permeabilität für einige Anwendungen nicht ausreichend hoch ist.

Zur Herstellung einer sehr dünnen Membran-Schicht auf einem makroporösen Grundkörper ist aus H. Zhao et al., Catal.Today, 1995, 25, 237 bis 240 ein Verfahren zur Herstellung einer metall-keramischen katalytischen Membran bekannt, bei dem eine dünne Metall enthaltende Membran-Schicht auf einem makroporösen keramischen Grundkörper erzeugt wird. Das Metall ist hierbei auf Festkörperpartikeln aufgebracht, die als dünne Deckschicht auf dem Trägerkörper erzeugt wurden.

Ein Nachteil dieser wie auch der oben genannten Folien-Membranen besteht jedoch weiterhin in der unzureichenden Langzeitstabilität. Derartige Membranen werden beim bestimmungsgemäßen Einsatz hohen Temperaturen ausgesetzt, so dass die Unterschiede im thermischen Ausdehnungskoeffizienten zwischen dem Grundkörper und der metallischen Membran-Schicht zusammen mit der Versprödung der Metall-Schicht beim Kontakt mit Wasserstoff zu starken Belastungen führen, die an nicht optimalen Verbindungsstellen zwischen Grundkörper und Membran-Schicht zur Ablösung führen können. Gerade bei den in der Regel eingesetzten großflächigen plattenförmigen Grundkörpern kann dies zum Funktionsausfall der Membran führen.

Die US 2001/0000380 A1 offenbart unterschiedliche Membrane zur Extraktion von Wasserstoff aus einem Wasserstoff-haltigen Fluidstrom. Einige dieser Membrane weisen einen rohrförmigen porösen oder nicht porösen Grundkörper auf, der mit einer metallischen Membranschicht versehen ist.

Die Aufgabe der vorliegenden Erfindung besteht darin, eine metallische Lösungs-Diffusions-Membran sowie ein Verfahren zu deren Herstellung anzugeben, die eine erhöhte Langzeitstabilität bei hohem Oberflächen-Volumen-Verhältnis und hoher Permeabilität aufweist.

### Darstellung der Erfindung

Die Aufgabe wird mit der metallischen Lösungs-Diffusions-Membran gemäß Patentanspruch 1 sowie mit dem Verfahren gemäß Patentanspruch 11 gelöst. Vorteilhafte Ausgestaltungen der Membran sowie des Verfahrens sind Gegenstand der Unteransprüche.

Die vorliegende metallische Lösungs-Diffusions-Membran besteht aus einer makroporösen Hohlfaser als Grundkörper, auf der über zumindest einer dünnen, metallisches Material enthaltenden Zwischenschicht eine dünne metallische Membran-Schicht ausgebildet ist.

Durch die Kombination einer Hohlfaser als Grundkörper mit einer dünnen metallischen Beschichtung entsteht eine rundum geschlossene metallische Membran-Schicht, die auch bei Ablösung vom Grundkörper an nicht optimalen Verbindungsstellen ihre Filtereigenschaft nicht verliert. Derartige lokale Ablösungen führen daher nicht zum Funktionsausfall der Membran.
Für die optimale Funktion der dünnen Membran-Schicht ist eine gleichmäßige, homogene Unterstruktur erforderlich, die bei der vorliegenden Membran als Zwischenschicht zwischen der Hohlfaser und der metallischen Membran-Schicht ausgebildet ist. Gerade diese Zwischenschicht ermöglicht die Realisierung einer sehr dünnen metallischen Membran-Schicht auf der Hohlfaser. Die sehr dünne Membran-Schicht führt wiederum zu einer hohen Permeabilität der Membran, beispielsweise für Wasserstoff. Weiterhin wird durch den Einsatz einer Hohlfaser als Grundkörper ein sehr gutes Oberflächen-Volumen-Verhältnis erreicht, wobei eine Vielzahl derartiger beschichteter Hohlfasern in einem Filterelement zum Einsatz kommen können.

Die metallische Membran-Schicht kann hierbei beispielsweise mit einer Schichtdicke im Bereich zwischen 0,1 und 10 µm ausgebildet sein. Vorzugsweise weist sie eine Schichtdicke im Bereich zwischen 0,7 und 1 µm auf. Die Zwischenschicht kann beispielsweise eine Schichtdicke im Bereich zwischen 1 und 10 µm aufweisen, vorzugsweise beträgt die Schichtdicke der Zwischenschicht bei der vorliegenden Membran jedoch 2 bis 3 µm. In der bevorzugten Ausführungsform ist diese Zwischenschicht aus Partikeln eines Sols gebildet, die mit einem Salz des Metalls der metallischen Membran-Schicht beschichtet sind, wobei die Porengröße der Zwischenschicht vorzugsweise im Bereich von ca. 6 nm liegt. Die Herstellung einer derartigen Zwischenschicht ist beispielsweise in der oben angeführten Veröffentlichung von J. Zhao et al. beschrieben, wobei die dort als Membran-Schicht hergestellte Schicht bei der vorliegenden Membran als Zwischenschicht dient.

Die eingesetzten Hohlfasern weisen vorzugsweise einen äußeren Durchmesser im Bereich zwischen 80 und 1500 µm, eine Wandstärke im Bereich zwischen 10 und 200 µm sowie eine mittlere Porengröße von etwa 0,2 µm auf, wobei ein geringerer äußerer Durchmesser mit einer geringeren Wandstärke verbunden ist.

Die Hohlfasern können beispielsweise aus einem keramischen oder metallischen Material gebildet sein. Als keramisches Material kommt hierbei insbesondere Al₂O₃ in Betracht. Die Metalle für die metallische Membran-Schicht sind vorzugsweise Palladium, Nickel, Platin oder deren Legierungen. Auch andere Metalle können für Gastrennverfahren eingesetzt werden. Beispiele hierfür sind Kupfer, Eisen, Silber, Aluminium oder deren Legierungen.

Beim vorliegenden Verfahren zur Herstellung der metallischen Lösungs-Diffusions-Membran werden ein oder mehrere makroporöse Hohlfasern bereitgestellt oder hergestellt, auf deren Oberfläche eine homogene Zwischenschicht aufgebracht wird, die metallische Keime für eine anschließende stromlose Abscheidung einer dünnen metallischen Membran-Schicht enthält. Die Zwischenschicht wird anschließend passiviert. Auf diese Zwischenschicht wird schließlich durch stromlose Abscheidung die dünne metallischen Membran-Schicht aufgebracht.
Vorzugsweise erfolgt das Aufbringen der homogenen Zwischenschicht mit einem Verfahren gemäß der oben angegebenen Veröffentlichung von J. Zhao et al., d.h. durch Aufbringen eines mit Metall-Komplexen modifizierten Böhmit-Sols und anschließende Kalzinierung.

In einer Ausführungsform, bei der die Porengröße des makroporösen Hohlkörpers für das direkte Aufbringen des Sols zu groß ausfällt, wird eine weitere Zwischenschicht mit geringerer Porengröße auf die Hohlfaser aufgebracht, so dass die Partikel des Sols nicht oder nur in geringem Ausmaß in die Poren eindringen können.

### Kurze Beschreibung der Zeichnungen

Die vorliegende metallische Lösungs-Diffusions-Membran sowie das Verfahren zu ihrer Herstellung werden nachfolgend ohne Beschränkung des allgemeinen Erfindungsgedankens nochmals anhand eines Ausführungsbeispiels in Verbindung mit den Zeichnungen kurz erläutert. Hierbei zeigen:
- Fig. 1: den grundsätzlichen Aufbau der vorliegenden Lösungs-Diffusions-Membran; und
- Fig. 2: schematisch eine Darstellung der Schichtstruktur der vorliegenden Lösungs-Diffusions-Membran.

### Wege zur Ausführung der Erfindung

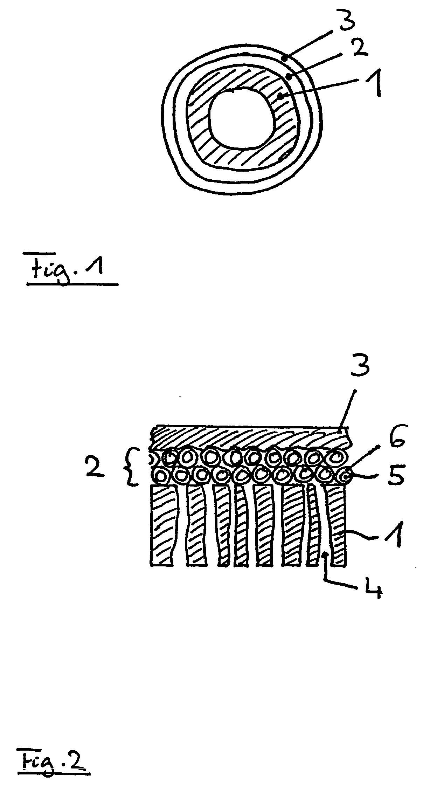

Fig. 1 zeigt in stark schematisierter Darstellung im Querschnitt den grundsätzlichen Aufbau der vorliegenden Lösungs-Diffusions-Membran anhand eines Ausführungsbeispiels, bei dem zwischen der metallischen Membranschicht 3 und der Hohlfaser 1 eine einzelne Zwischenschicht 2 angeordnet ist. Diese Zwischenschicht 2 stellt einerseits die Keime für eine stromlose Abscheidung der metallischen Schicht 3 bereit und dient andererseits als homogener Untergrund für die stromlose Abscheidung der metallischen Membranschicht 3.

Im vorliegenden Beispiel wird als Hohlfaser 1 eine makroporöse α-Al₂O₃-Hohlfaser bereitgestellt, die beispielsweise mit einer Spin-Extrusions-Technik hergestellt werden kann. Die in diesem Ausführungsbeispiel eingesetzten Hohlfasern haben einen äußeren Durchmesser von 700 bis 800 µm, einen inneren Durchmesser von 500 bis 600 µm und eine mittlere Porengröße von 0,2 µm. Auf die Oberfläche dieser Fasern wird ein Böhmit-Sol, das mit einem Palladium-Komplex modifiziert ist, aufgebracht, um Palladiumkeime auf die Oberfläche der keramischen Hohlfasern aufzubringen. Diese Palladiumkeime dienen als Katalysatoren für eine nachfolgende stromlose Abscheidung von Palladium.

Das modifizierte Sol wird mit einem Dip-Coating-Prozess aufgebracht, wobei gleichzeitig ein Vakuum am inneren Volumen bzw. Hohlkanal der Hohlfasern angelegt wird. Die Partikelgröße des Sols beträgt etwa 60 bis 100 nm. Durch das Anlegen des Vakuums an der Innenfläche der Hohlfasern wird erreicht, dass ein kleiner Teil der Solpartikel in die Poren der Hohlfaser eindringt, so dass die Adhäsion der Zwischenschicht zur Hohlfaser verbessert wird.

Anschließend erfolgt eine Kalzinierung bei 750° C an Luft. Danach wird die Oberfläche in strömendem Wasserstoff bei etwa 200° C reduziert bzw. passiviert.
Die mittlere Porengröße der entstandenen Pd/γ-Al₂O₃-Zwischenschicht beträgt bei dieser Verfahrensführung etwa 5,7 nm. Die enge Porengrößenverteilung sowie die sehr homogene Oberfläche dieser Zwischenschicht ermöglichen die anschließende defektlose Abscheidung einer ultradünnen Palladium-Schicht. Der stromlose Abscheidungsprozess basiert auf einer chemischen Reaktion zwischen [PdEDTA]²- und Hydrazin unter der katalytischen Wirkung der Palladiumkeime. Die Oberfläche der Hohlfasern bzw. der darauf aufgebrachten Zwischenschicht wird bei diesem Prozess mit einer kontinuierlichen, dichten Palladium-Schicht bedeckt, die eine geringe Dicke von lediglich 0,6 µm aufweist. Die Dauer des stromlosen Abscheideprozesses liegt bei einer derartigen Schichtdicke im vorliegenden Beispiel bei etwa 1 Stunde.

Als Ergebnis wird eine metallische Lösungs-Diffusions-Membran erhalten, die aus einer makroporösen keramischen Hohlfaser, einer Zwischenschicht von etwa 3 bis 4 µm Dicke sowie einer darauf aufgebrachten ultradünnen Palladium-Schicht mit etwa 0,6 µm Dicke besteht.

Der Wasserstofftransport durch eine Palladium-Membran ist durch einen Lösungs-Diffusions-Mechanismus charakterisiert, der die folgenden Schritte beinhaltet:
a) reversible dissoziative Chemisorption von H₂ auf der Membranoberfläche;
b) Volumendiffusion von atomarem Wasserstoff in das Metall aufgrund der Antriebskraft des Konzentrationsgradienten; und
c) Rekombination von Wasserstoffatomen zu Molekülen auf der gegenüberliegenden Oberfläche und Desorption.

Während in dicken metallischen Membranen der Wasserstofftransport in der Regel durch die Volumendiffusion bestimmt wird, spielt bei der vorliegenden dünnen metallischen Membran in erster Linie der Reaktionsprozess des Wasserstoffes mit der metallischen Oberfläche die bestimmende Rolle.
Durch die Porengröße der Zwischenschicht von ca. 6 nm spielt diese Schicht verglichen mit der metallischen Membranschicht keine zusätzlich begrenzende Rolle für den Wasserstofftransport.

Der grundsätzliche Schichtaufbau der vorliegenden Lösungs-Diffusions-Membran ist nachfolgend nochmals anhand der Fig. 2 zu erkennen. Diese Figur zeigt einen Ausschnitt aus der Hohlfaser 1 mit den durchgängigen Makroporen 4. Auf der Oberfläche der Hohlfaser 1 ist die Zwischenschicht 2 ausgebildet. Diese Zwischenschicht setzt sich aus mit Metallsalzen 6 beschichteten Solpartikeln 5 zusammen. Auf der Zwischenschicht ist schließlich die metallische Membranschicht 3 aufgebracht.

Eine derartige metallische Lösungs-Diffusions-Membran, wie sie durch die Verfahrensschritte des vorangehend erläuterten Ausführungsbeispieles hergestellt wird, weist eine ausgezeichnete Langzeitstabilität auf. Der Trennungsfaktor Wasserstoff/Stickstoff, der als Permeabilitätsverhältnis von reinem Wasserstoff zu reinem Stickstoff definiert ist, beträgt bei einer derartigen Membran mehr als 1000. Die Membran weist neben einem hohen Trennflächen-Volumen-Verhältnis eine hohe Permeabilität auf und lässt sich zudem mit verringerten Kosten herstellen, da eine geringere Menge an teurem metallischen Material für die Membranschicht erforderlich ist.

### BEZUGSZEICHENLISTE

| | |
|---|---|
| 1 | Makroporöse Hohlfaser |
| 2 | Zwischenschicht |
| 3 | Metallische Membranschicht |
| 4 | Makroporen |
| 5 | Solpartikel |
| 6 | Metallsalz |

## Patentansprüche

1. Metallische Lösungs-Diffusions-Membran aus einem makroporösen Grundkörper, auf dem eine dünne metallische Membranschicht (3) ausgebildet ist,
**dadurch gekennzeichnet,**
**dass** der Grundkörper eine Hohlfaser ist (1), wobei zwischen der Hohlfaser (1) und der metallischen Membranschicht (3) eine metallisches Material enthaltende Zwischenschicht (2) ausgebildet ist.

2. Metallische Lösungs-Diffusions-Membran nach Anspruch 1,
**dadurch gekennzeichnet,**
**dass** die metallische Membranschicht (3) eine Schichtdicke im Bereich zwischen 0,1 und 10 µm aufweist.

3. Metallische Lösungs-Diffusions-Membran nach Anspruch 1,
**dadurch gekennzeichnet,**
**dass** die metallische Membranschicht (3) eine Schichtdicke im Bereich zwischen 0,7 und 1 µm aufweist.

4. Metallische Lösungs-Diffusions-Membran nach einem der Ansprüche 1 bis 3,
**dadurch gekennzeichnet,**
**dass** die Zwischenschicht (2) eine Schichtdicke im Bereich zwischen 1 und 10 µm aufweist.

5. Metallische Lösungs-Diffusions-Membran nach einem der Ansprüche 1 bis 3,
**dadurch gekennzeichnet,**
**dass** die Zwischenschicht (2) eine Schichtdicke im Bereich zwischen 2 und 3 µm aufweist.

6. Metallische Lösungs-Diffusions-Membran nach einem der Ansprüche 1 bis 5,
**dadurch gekennzeichnet,**
**dass** die Zwischenschicht (3) aus Partikeln eines Sols gebildet ist, die mit einem Salz des Metalls der metallischen Membranschicht (3) beschichtet sind.

7. Metallische Lösungs-Diffusions-Membran nach einem der Ansprüche 1 bis 6,
**dadurch gekennzeichnet,**
**dass** die Hohlfaser einen äußeren Durchmesser im Bereich zwischen 80 und 1500 µm, eine Wandstärke im Bereich zwischen 10 und 200 µm und eine mittlere Porengröße von etwa 0,2 µm aufweist.

8. Metallische Lösungs-Diffusions-Membran nach einem der Ansprüche 1 bis 7,
**dadurch gekennzeichnet,**
**dass** die Hohlfaser (1) aus einem keramischen Material gebildet ist.

9. Metallische Lösungs-Diffusions-Membran nach einem der Ansprüche 1 bis 7,
**dadurch gekennzeichnet,**
**dass** die Hohlfaser (1) aus einem metallischen Material gebildet ist.

10. Metallische Lösungs-Diffusions-Membran nach einem der Ansprüche 1 bis 9,
**dadurch gekennzeichnet,**
**dass** die metallische Membranschicht (3) aus Palladium oder einer Palladiumlegierung gebildet ist.

11. Verfahren zur Herstellung der metallischen Lösungs-Diffusions-Membran gemäß einem oder mehreren der vorangehenden Ansprüche mit folgenden Schritten:
- Bereitstellen einer oder mehrerer makroporöser Hohlfasern (1);
- Aufbringen einer homogenen Zwischenschicht (2) auf die Hohlfasern (1), die metallische Keime für eine anschließende stromlose Abscheidung einer dünnen metallischen Membranschicht (3) enthält;
- Passivierung der Zwischenschicht (2); und
- Aufbringen der dünnen metallischen Membranschicht (3) durch stromlose Abscheidung.

12. Verfahren nach Anspruch 11,
**dadurch gekennzeichnet,**
**dass** das Aufbringen der homogenen Zwischenschicht (2) durch Aufbringen eines mit Metall-Komplexen modifizierten Böhmit-Sols und anschließende Kalzinierung erfolgt.

13. Verfahren nach Anspruch 12,
**dadurch gekennzeichnet,**
**dass** das Aufbringen der homogenen Zwischenschicht mit einem Dip-Coating-Prozess erfolgt, während im Inneren der Hohlfaser ein Unterdruck erzeugt wird.

14. Verfahren nach einem der Ansprüche 11 bis 13,
**dadurch gekennzeichnet,**
**dass** die Passivierung durch Überströmen der Zwischenschicht (2) mit Wasserstoff erfolgt.

## Claims

1. Metal solution-diffusion membrane comprising a macroporous base body, on which a thin metal membrane layer (3) is configured, **characterised in that** the base body is a hollow fibre (1), wherein an intermediate layer (2) containing metal material is configured between the hollow fibre (1) and the metal membrane layer (3).

2. Metal solution-diffusion membrane according to Claim 1, **characterised in that** the metal membrane layer (3) has a layer thickness in the range of between 0.1 and 10 µm.

3. Metal solution-diffusion membrane according to Claim 1, **characterised in that** the metal membrane layer (3) has a layer thickness in the range of between 0.7 and 1 µm.

4. Metal solution-diffusion membrane according to one of Claims 1 to 3, **characterised in that** the intermediate layer (2) has a layer thickness in the range of between 1 and 10 µm.

5. Metal solution-diffusion membrane according to one of Claims 1 to 3, **characterised in that** the intermediate layer (2) has a layer thickness in the range of between 2 and 3 µm.

6. Metal solution-diffusion membrane according to one of Claims 1 to 5, **characterised in that** the intermediate layer (2) is formed from particles of a sol, which are coated with a salt of the metal of the metal membrane layer (3).

7. Metal solution-diffusion membrane according to one of Claims 1 to 6, **characterised in that** the hollow fibre has an outside diameter in the range of between 80 and 1500 µm, a wall thickness in the range of between 10 and 200 µm and an average pore size of about 0.2 µm.

8. Metal solution-diffusion membrane according to one of Claims 1 to 7, **characterised in that** the hollow fibre (1) is formed from a ceramic material.

9. Metal solution-diffusion membrane according to one of Claims 1 to 7, **characterised in that** the hollow fibre (1) is formed from a metal material.

10. Metal solution-diffusion membrane according to one of Claims 1 to 9, **characterised in that** the metal membrane layer (3) is formed from palladium or a palladium alloy.

11. Method for the production of the metal solution-diffusion membrane according to one or more of the preceding claims with the following steps:
• preparation of one or more macroporous hollow fibres (1);
• application of a homogeneous intermediate layer (2) to the hollow fibres (1), which contains metal nuclei for subsequent currentless deposition of a thin metal membrane layer (3);
• passivation of the intermediate layer (2); and
• application of the thin metal membrane layer (3) through currentless deposition.

12. Method according to Claim 11, **characterised in that** the application of the homogeneous intermediate layer (2) is achieved by application of a boehmite sol modified with metal complexes and subsequent calcination.

13. Method according to Claim 12, **characterised in that** the application of the homogeneous intermediate layer is achieved by a dip coating process, while a low pressure is generated inside the hollow fibre.

14. Method according to one of Claims 11 to 13, **characterised in that** the passivation is achieved by passing hydrogen over the intermediate layer (2).

## Revendications

1. Membrane métallique de solubilisation-diffusion composée d'un corps de base macroporeux comportant une mince couche membranaire métallique (3),
**caractérisée en ce que**
le corps de base est une fibre creuse (1), avec une couche intermédiaire (2) contenant un matériau métallique formée entre la fibre creuse (1) et la couche membranaire métallique (3).

2. Membrane métallique de solubilisation-diffusion selon la revendication 1,
**caractérisée en ce que**
la couche membranaire métallique (3) présente une épaisseur de 0,1 à 10 µm.

3. Membrane métallique de solubilisation-diffusion selon la revendication 1,
**caractérisée en ce que**
la couche membranaire métallique (3) présente une épaisseur de 0,7 à 1 µm.

4. Membrane métallique de solubilisation-diffusion selon l'une quelconque des revendications 1 à 3,
**caractérisée en ce que**
la couche intermédiaire (2) présente une épaisseur de 1 à 10 µm.

5. Membrane métallique de solubilisation-diffusion selon l'une quelconque des revendications 1 à 3,
**caractérisée en ce que**
la couche intermédiaire (2) présente une épaisseur de 2 à 3 µm.

6. Membrane métallique de solubilisation-diffusion selon l'une quelconque des revendications 1 à 5,
**caractérisée en ce que**
la couche intermédiaire (2) est constituée de particules d'un sol recouvertes d'un sel de métal de la couche membranaire métallique (3).

7. Membrane métallique de solubilisation-diffusion selon l'une quelconque des revendications 1 à 6,
**caractérisée en ce que**
la fibre creuse présente un diamètre extérieur situé entre 80 et 1500 µm, une épaisseur de paroi située entre 10 et 200 µm et une dimension moyenne des pores d'environ 0,2 µm.

8. Membrane métallique de solubilisation-diffusion selon l'une quelconque des revendications 1 à 7,
**caractérisée en ce que**
la fibre creuse (1) se compose de céramique.

9. Membrane métallique de solubilisation-diffusion selon l'une quelconque des revendications 1 à 7,
**caractérisée en ce que**
la fibre creuse (1) est en matériau métallique.

10. Membrane métallique de solubilisation-diffusion selon l'une quelconque des revendications 1 à 9,
**caractérisée en ce que**
la couche membranaire métallique (3) est en palladium ou alliage de palladium.

11. Procédé de production de la membrane métallique de solubilisation-diffusion selon l'une quelconque ou plusieurs des revendications précédentes, comprenant les étapes suivantes consistant à :
- fournir une ou plusieurs fibres creuses (1) macroporeuses ;
- appliquer sur les fibres creuses (1) une couche intermédiaire (2) homogène qui contient des noyaux métalliques permettant un dépôt sans courant subséquent d'une mince couche membranaire métallique (3) ;
- passiver la couche intermédiaire (2) ; et
- appliquer la mince couche membranaire métallique (3) par dépôt sans courant.

12. Procédé selon la revendication 11,
**caractérisé en ce que**
l'application de la couche intermédiaire (2) homogène se produit par application d'un sol de bohémite modifié par des complexes métalliques et par calcination subséquente.

13. Procédé selon la revendication 12,
**caractérisé en ce que**
l'application de la couche intermédiaire homogène se produit selon un procédé de revêtement par immersion et en écartant une dépression à l'intérieur de la fibre creuse.

14. Procédé selon l'une quelconque des revendications 11 à 13,
**caractérisé en ce que**
la passivation se produit sous l'effet du passage d'un courant d'hydrogène sur la couche intermédiaire (2).
